# FASCICULE DE BREVET EUROPEEN

(11) **EP 3 267 232 B1**
(45) Date de publication et mention de la délivrance du brevet: **23.12.2020**
(21) Numéro de dépôt: 17179693.1
(22) Date de dépôt: 05.07.2017
(51) Int. Cl.: G02B 6/42

(54) **SYSTÈME DE CONNEXION D'UNE PLURALITÉ DE FICHES A UN ENSEMBLE MONOBLOC FORME D'UN PANNEAU DE BOITIER D'ÉQUIPEMENT ELECTRONIQUE ET D'UNE PLURALITÉ D'EMBASES DE CONNECTEURS**
VERBINDUNGSSYSTEM EINER VIELZAHL VON STECKERSTIFTEN AN EINE MONOBLOCKANORDNUNG, BESTEHEND AUS EINEM GEHÄUSEPANEEL EINES ELEKTRONISCHEN GERÄTS UND EINER VIELZAHL VON BUCHSEN
SYSTEM FOR CONNECTING A PLURALITY OF PINS TO A UNITARY ASSEMBLY MADE UP OF AN ELECTRONIC EQUIPMENT HOUSING PANEL AND A PLURALITY OF CONNECTOR BASES

(30) Priorité: 07.07.2016 FR 1656515
(43) Date de publication de la demande: 10.01.2018
(73) Titulaire: RADIALL, 93300 Aubervilliers (FR)
(72) Inventeur: BOURGEAS, Fabien, 38500 SAINT NICOLAS DE MACHERIN (FR); LOMUSCIO, Dominique, 38590 SILLANS (FR); DUPEUX, Benoît, 38470 VATILIEU (FR)
(74) Mandataire: Nony

(56) Documents cités:
- US-A1- 2004 156 595
- US-A1- 2013 294 731
- US-A1- 2014 003 771

## Description

### Domaine technique

La présente invention concerne un système de connexion d'une pluralité de fiches à un ensemble comprenant un panneau de boitier d'un équipement électronique et une pluralité d'embases configurées chacune pour être connectée à une fiche, qui peut être une fiche intégrant une clé sans câble pour émission par réseau sans fil, de type wifi ou Bluetooth®, ou une fiche montée sur au moins un câble, notamment une fiche comportant au moins un conducteur optique ou un conducteur électrique.

L'invention s'applique en particulier aux équipements électroniques qui mettent en œuvre plusieurs voies optiques avec des connexions, que l'on retrouve en environnement extérieur et/ou en conditions sévères notamment dans les installations de télécommunications telles que des antennes-relais de téléphonie mobile, dans les réseaux de transmission de données à haut débit vers l'habitat ou l'industrie, dans les réseaux de caméras de surveillance ou encore pour la transmission de données dans des installations ferroviaires.

L'invention s'applique également à la connectique de type industrielle.

### Art antérieur

Il est connu, dans la plupart des équipements électroniques destinés à être implantés en environnement extérieur où il est nécessaire de réaliser des connexions entre fiche montée sur un câble et embase correspondante, de rapporter l'embase sur un des panneaux de boitier de l'équipement.

En particulier, l'embase comporte une platine de fixation qui est vissée sur le panneau. Les embases peuvent aussi être de forme circulaire, filetées avec le corps directement vissé dans le panneau ou maintenu par un écrou. Le corps peut aussi être assemblé en force dans le panneau.

Outre le temps de montage dédié qui peut être long lorsque l'équipement électronique doit mettre en œuvre une multitude de connecteurs, et donc d'embases à rapporter, il peut s'avérer complexe d'obtenir un alignement satisfaisant entre l'interface électrique du signal réalisée sur une carte imprimée de l'équipement et celle de l'embase et donc de l'embase, en dépit des tolérances prévues par les fabricants.

En plus, de nouveaux développements dans les installations en particulier de télécommunications, pour le déploiement des standards 4G +, LTE+, ou encore le futur 5G, mènent à des équipements électroniques de plus en plus petits avec un nombre plus conséquent de fonctions, et donc de câbles conduisant les signaux et par là des systèmes de connexions.

Or, réduire la taille des équipements électroniques impose d'augmenter la densité physique des systèmes de connexions associés sur les équipements.

La solution précitée d'embases rapportées sur un panneau du boitier d'un équipement électronique ne va pas dans ce sens, puisque par définition les moyens dédiés à la fixation amovible des embases présentent un encombrement minimal.

Par ailleurs, les systèmes de verrouillage existants des fiches sur les embases imposent également un encombrement minimal entre deux embases adjacentes.

En effet, dans ces systèmes, un levier de verrouillage à deux branches supportant chacune une encoche de verrouillage, est monté pivotant sur chaque embase pour venir loger les encoches autour des ergots de verrouillage solidaires du corps de la fiche correspondante, et assurer ainsi le verrouillage de la fiche à l'embase dans leur configuration connectée. Cela impose donc un espace minimal dédié à l'emplacement du levier de verrouillage, entre deux embases adjacentes.

En outre, les risques de casses liés à la présence de leviers de verrouillage solidaires des embases rapportées sur les panneaux d'équipements sont importants.

La demande de brevet US 2013/294731 A1 divulgue un système de connexion pour un câble optique, dans lequel le verrouillage de la fiche à l'embase se fait par levier depuis l'embase.

La demande de brevet US 2014/003771 A1 divulgue la connexion d'une pluralité de connecteurs optiques destinés à être agencés selon au moins une rangée la plus compacte possible et être connectés au travers d'une porte à un panneau d'un système de distribution à fibres optiques.

Il existe un besoin pour améliorer les systèmes de connexion d'une pluralité de fiches à une multitude d'embases de connecteurs sur un même panneau de boitier d'équipement électronique, afin de remédier à tout ou partie des inconvénients de l'art antérieur cités ci-dessus, notamment en vue de réduire l'encombrement des connecteurs sur un panneau, de réduire le temps de montage nécessaire à leur installation, et de diminuer les risques de casses liés aux leviers des systèmes de verrouillage de fiche sur embase.

Le but de l'invention est de répondre au moins en partie à ce besoin.

### Exposé de l'invention

Pour ce faire, l'invention concerne un système de connexion, comportant :
- une pluralité de fiches de connexion sur chacune desquelles est monté un levier de verrouillage à deux bras supportant chacun un crochet de verrouillage d'un système de verrouillage,
- un ensemble comprenant :
   - un panneau de boitier d'équipement électronique, destiné à loger une carte de circuit électronique, le panneau comprenant une pluralité d'ouvertures;
   - une pluralité d'embases adjacentes, comportant chacune une partie tubulaire creuse formant un rebord faisant saillie par rapport au panneau du côté de l'équipement opposé à celui duquel la carte de circuit électronique est agencée, chaque rebord portant deux ergots de verrouillage du système de verrouillage d'une fiche à une des embases dans leur configuration de connexion mutuelle, les cavités des parties tubulaires des embases définissant les ouvertures du panneau.

Selon l'invention, la pluralité d'embases est monobloc avec le panneau de l'équipement et les embases de l'ensemble monobloc et les fiches sont configurées de telle sorte que lorsque chaque fiche est connectée à une des embases et verrouillée à cette dernière au moyen du levier de verrouillage dans la position d'accrochage des crochets sur les ergots de verrouillage, deux bras adjacents de fiches adjacentes sont en appui-plan, linéaire ou ponctuel l'un contre l'autre.

Grâce à l'invention, on réduit l'encombrement nécessaire à la connexion de plusieurs fiches sur un même équipement électronique, car le pas d'espacement entre deux connecteurs distincts et adjacents peut être réduit.

Cela est rendu possible du fait de la suppression de l'emplacement dédié aux moyens de fixation amovible des embases sur le panneau de boitier comme selon l'état de l'art et à la diminution de l'espace nécessaire aux systèmes de verrouillage.

En inversant la localisation des leviers de verrouillage par rapport à l'état de l'art, c'est-à-dire en les disposant sur les fiches, les inventeurs ont pu intégrer les ergots de verrouillage complémentaires directement sur les embases formant avec le panneau un ensemble monobloc et en les rendant les plus proches uns avec les autres, de préférence jointifs entre eux.

Autrement dit, l'invention permet d'augmenter la densité des connecteurs sur l'équipement, car comparativement à l'état de l'art, il est possible de connecter un nombre plus important de fiches de connecteurs pour une même longueur de panneau de boitier d'équipement.

La compacité induite par la réalisation d'un ensemble monobloc des embases avec le panneau peut aller jusqu'à pouvoir mettre en appui plan-plan, linéaire ou ponctuel les fiches adjacentes par les bras de leur levier de verrouillage respectif. Cela est rendu possible par le fait que chaque levier de verrouillage est accessible manuellement par un opérateur depuis le dessus du boitier de la fiche.

Avec n'importe lequel des connecteurs connus de type SFP, optique, RJ45, puissance, de données ou signaux combinés, l'invention permet d'obtenir un pas d'espacement entre deux embases adjacentes de l'ordre de 26mm.

Un avantage subséquent au fait que les fiches sont appui les unes contre les autres est d'augmenter la résistance mécanique de la connectique. En effet, en cas d'effort de traction latéral appliqué à un cordon/câble relié à une fiche, celle-ci vient en appui contre la fiche adjacente, qui apporte donc un contre-effort à l'effort latéral.

L'invention définit en quelque sorte une nouvelle interface mécanique de moindre encombrement, qui permet d'assurer efficacement la fixation mécanique de chaque boitier de la pluralité des fiches sur le boitier de l'équipement, un pré-alignement de chaque fiche avec l'interface électrique ou optique montée sur une carte électronique (PCB) située à l'intérieur du boitier de l'équipement, une connexion électrique de la masse du câble relié à une fiche au boitier de l'équipement et l'étanchéité entre le boitier de chaque fiche et le boitier de l'équipement.

L'interface électrique ou optique permet quant à elle d'assurer la circulation du signal électrique ou optique ou du courant électrique de puissance, ou les deux à la fois au sein de l'équipement.

Selon une variante de réalisation, au moins une des fiches, destinée à être montée sur au moins un câble comportant au moins un conducteur optique, comporte un corps et au moins un convertisseur optoélectronique fixé dans le corps de façon amovible.

Selon un mode de réalisation avantageux, chaque embase peut comprend un ou plusieurs formes en relief ou en creux dans sa cavité adaptée pour s'emboîter avec une ou plusieurs formes respectivement en creux ou en relief sur l'extrémité libre d'une fiche donnée, destinée à être connectée avec ladite embase, ou vice-et-versa.

Selon ce mode, au moins une embase parmi la pluralité des embases comprend un ou des reliefs ou creux de dimensions différentes et/ou agencés différemment par rapport à celui ou ceux d'une autre embase parmi la pluralité des embases. Ces formes de reliefs et de creux qui diffèrent entre différentes versions de connecteurs (fiches et embases associés) constituent donc des moyens de détrompage qui peuvent être spécifiques à chaque version de connecteur. Autrement dit, grâce à ces formes de reliefs et de creux complémentaires, on réalise un codage physique, de sorte qu'il est impossible d'introduire une fiche d'une version dans une embase d'une autre version ou encore d'introduire la fiche correcte à l'envers. Un tel codage physique est avantageux car il permet d'éviter les erreurs de connexion par l'utilisateur, mais aussi d'éviter d'endommager les interfaces de signal qui peuvent présenter des parties fragiles comme des contacts très fins ou des faces optiques.

Avantageusement, chaque embase peut comprendre également une ou plusieurs inscriptions en relief ou en creux et/ou une ou plusieurs zones de couleur, à l'extérieur de sa cavité, la(les) inscription(s) et/ou zone(s) de couleur correspondant à celle(s) d'une fiche donnée, destinée à être connectée avec ladite embase. Ces inscriptions constituent donc un codage visuel entre fiche et embase d'une même version. Ce codage visuel peut venir compléter avantageusement le codage physique précité. Ainsi, puisque les embases forment un ensemble monobloc avec le panneau de l'équipement électronique, réaliser des marques de couleurs correspondantes avec les fiches associées permet à un utilisateur de savoir rapidement visuellement quelle fiche doit être connectée dans telle ou telle interface.

De préférence, les couleurs peuvent être choisies en fonction des conventions et normes en vigueur dans le métier de la connectique. Par exemple, on peut inscrire une zone en bleu pour les connections optiques monomode, en vert pour les connections optiques multimode, en orange pour les connexions d'alimentation électrique, etc...

L'invention concerne également sous un autre de ses aspects, un ensemble monobloc, destiné à un système de connexion décrit ci-avant, la pluralité d'embases étant moulée intégralement avec le panneau.

De préférence, les ergots de verrouillage sont continus entre les embases adjacentes. On obtient ainsi une compacité accrue.

Selon une caractéristique avantageuse, les bords extérieurs et la cavité de chaque rebord comportent au moins une dépouille. De préférence, la dépouille intérieure de la cavité est adaptée pour coopérer avec l'extérieur du corps d'une fiche.

Selon un mode de réalisation avantageux, chaque ergot de verrouillage comprend une zone de contact avec un crochet de verrouillage d'un levier de verrouillage d'une fiche en position de verrouillage, la zone de contact comportant au moins une dépouille, ou une pente droite inclinée, ou une pente incurvée adaptée pour générer, lors de l'accrochage des crochets sur lesdits ergots, des composantes de force dirigées l'une vers l'autre de sorte à rapprocher mutuellement les bras du levier d'une fiche. Cela permet donc d'augmenter la force de verrouillage d'une fiche sur son embase à laquelle elle est connectée.

La dépouille de la zone de contact peut avoir une forme extérieure tronconique, le sommet du cône étant vers la cavité de l'embase qui le porte.

Selon une variante de réalisation, chaque rebord d'embase intègre à son extrémité libre une lèvre faisant saillie de la face de connexion avec une fiche, la lèvre étant adaptée pour protéger mécaniquement et/ou de la lumière, de l'environnement extérieur, un joint d'étanchéité interposé entre embase et fiche.

La lèvre peut être un profilé continu tout autour de la cavité d'embase.

### Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :
- la figure 1 est une vue en perspective partielle d'un premier exemple de mise en œuvre de l'invention, la figure 1 représentant un ensemble avec panneau de boitier d'équipement électronique moulé intégralement avec une pluralité d'embases alignées;
- la figure 2 est une vue en perspective d'un ensemble selon la figure 1 mis en œuvre dans un équipement électronique, la figure 2 montrant une fiche connectée à chaque embase et en configuration verrouillée à celle-ci par un système de verrouillage conforme à l'invention;
- la figure 3 est une vue en perspective d'un exemple de mise en œuvre d'une fiche destinée à être connectée à une des embases de l'ensemble selon l'invention et sur laquelle est montée un câble optique ;
- la figure 4 est une vue de détail en perspective d'une des embases de l'ensemble selon l'invention ;
- la figure 4A est une vue en coupe transversale de l'embase de la figure 4 ;
- la figure 5 est une vue de détail en perspective d'un ergot de verrouillage solidaire de l'une des embases de l'ensemble selon l'invention ;
- la figure 6 est une vue en coupe transversale d'une des embases de l'ensemble selon l'invention avec un levier de verrouillage solidaire de la fiche en configuration verrouillé sur les deux ergots de verrouillage de l'embase ;
- la figure 7 est une vue de détail en perspective de la figure 2, la figure 7 montrant l'agencement relatif des leviers de verrouillage adjacents ainsi que le positionnement des joints d'étanchéité entre fiches et embases associés dans leur configuration connectée et verrouillée l'une à l'autre ;
- la figure 8 représente en vue de perspective une variante de réalisation d'une embase d'un ensemble selon l'invention ;
- les figures 9A et 9B montrent en vue de face respectivement une fiche d'une version donnée et une embase à laquelle seule la fiche de la version donnée peut être connectée ;
- les figures 10A à 10B à 13A à 13B montrent également plusieurs fiches d'autres versions et les embases à chacune desquelles seule une fiche d'une des autres versions peut être connectée.

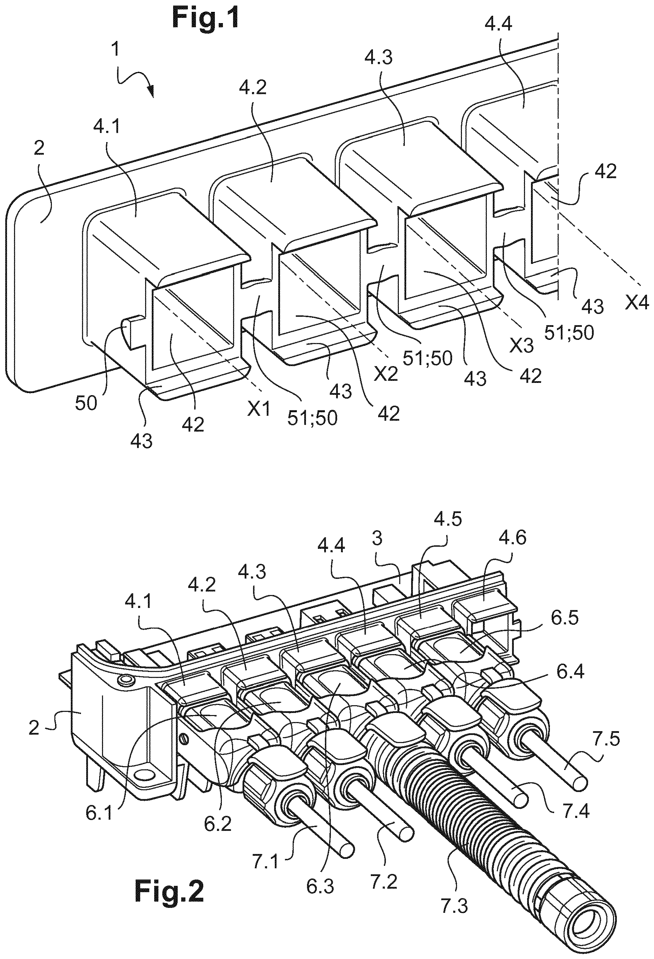

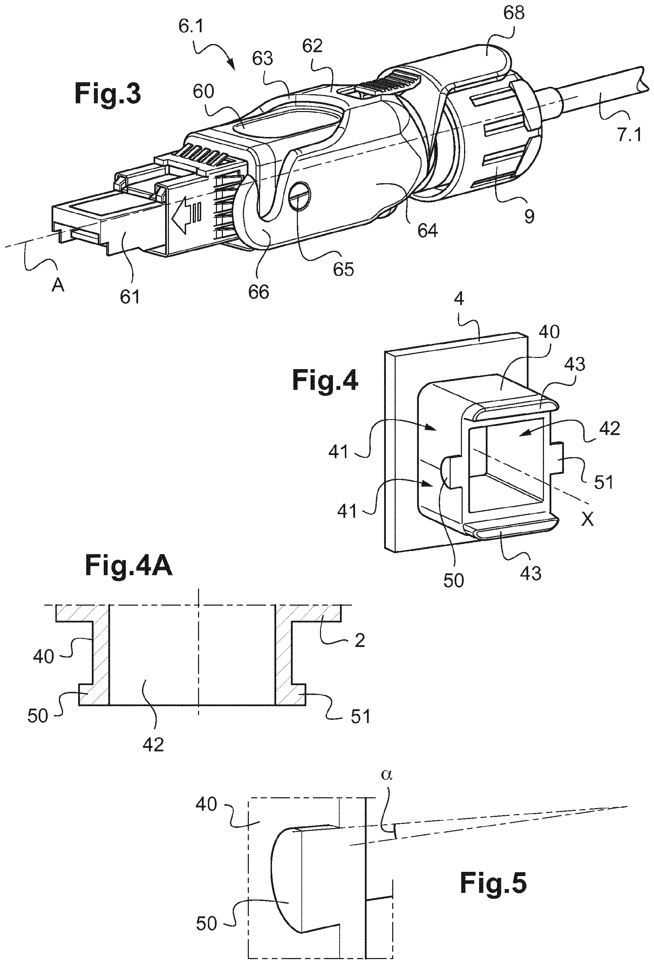

Le système de connexion selon l'invention comprend un ensemble monobloc représenté sur la figure 1, désigné globalement par 1, et une pluralité de fiches 6 qui peuvent être d'une version différente de l'une à l'autre, comme celle représentée en figure 3 détaillée ci-après.

L'ensemble monobloc 1 selon l'invention est destiné à être intégré dans un équipement électronique configuré pour recevoir une pluralité de signaux optique, électrique, de puissance, ou toute combinaison de ces signaux. Pour ce faire, l'équipement loge une carte de circuit électronique détaillée ci-après.

Cet ensemble 1 comporte tout d'abord un panneau 2 de boitier d'équipement électronique dans lequel la carte électronique 3 est destinée à être logée, ainsi qu'une pluralité d'embases 4.1, 4.2, 4.3, 4.4, 4.5 adjacentes et alignées sur une unique rangée.

Chaque embase 4.1, 4.2, 4.3, 4.4, 4.5 s'étend selon un axe longitudinal X1, X2, X3, X4, X5 et comporte une partie tubulaire creuse 40 formant un rebord faisant saillie par rapport au panneau 2 du côté de l'équipement opposé à celui duquel la carte de circuit électronique 3 est agencée.

Selon l'invention, comme illustré en figures 1 et 2, la pluralité d'embases 4.1, 4.2, 4.3, 4.4, 4.5 est moulée intégralement avec le panneau 2, les cavités 42 des parties tubulaires des embases définissant les ouvertures du panneau.

En outre, chaque rebord d'embase 40 porte deux ergots de verrouillage 50, 51 d'un système de verrouillage 5 d'une fiche 6.1, 6.2, 6.3, 6.4, 6.5 à une des embases dans leur configuration de connexion mutuelle, chaque fiche 6.1, 6.2, 6.3, 6.4, 6.5 étant montée sur un câble indépendant 7.1, 7.2, 7.3, 7.4, 7.5.

Tous les ergots de verrouillage 50, 51 sont continus entre les embases adjacentes.

Un exemple de fiche 6.1 destinée à être connectée à l'une des embases 4.1, 4.2, 4.3, 4.4, 4.5 de l'ensemble 1 selon l'invention est montrée en figure 3.

Cette fiche 6 peut être configurée pour être montée sur un unique câble 7.1 qui peut ne comporter que des conducteurs optiques. La fiche 6 comporte un corps 60 qui peut être réalisé en plusieurs pièces et qui s'étend selon un axe longitudinal rectiligne A.

Le corps 60 peut être réalisé par exemple en aluminium ou zamak moulé sous pression, revêtu d'une protection anticorrosive ou encore en matière(s) plastique(s), avec ou sans métallisation. Il peut aussi être usiné ou réalisé par une technologie de fabrication additive.

Le montage de la fiche 6.1 sur le câble 7.1 peut être facilité par une pièce 9, destinée à être disposée sur l'extrémité arrière de la fiche 6. Comme illustré en figure 3, cette pièce 9 est par exemple un presse-étoupe de rétention du câble 7.1.

Un convertisseur optoélectronique 10, encore appelé *transceiver* en anglais, peut être fixé de manière amovible et interchangeable à l'intérieur d'un logement du corps 60 prévu à cet effet. Le *transceiver* 10 est par exemple disposé dans le logement au niveau de l'extrémité avant 61 du corps 60, le *transceiver* ayant une forme de bec, qui est destinée à être introduite à l'intérieur de l'équipement électronique 3. On pourra se reporter avantageusement à la demande de brevet WO 2012/101569 qui décrit et revendiqué la fixation amovible et interchangeable du *transceiver* 10*.*

Dans l'exemple illustré, le convertisseur optoélectronique 10 est au contact du corps 60 de la fiche 6, de telle sorte que le boîtier de ce convertisseur optoélectronique 10 est au même potentiel électrique que le corps 60 de la fiche 6.

Un ou plusieurs contacts optiques peuvent être reliés à une extrémité à un conducteur optique, notamment une fibre optique, du câble 7 et être connectés à leur autre extrémité à une entrée du *transceiver* 10*.* Les contacts optiques sont par exemple des contacts de type LC et le convertisseur optoélectronique 10 est par exemple un transceiver de type SFP.

Comme illustré en figure 3, un levier de verrouillage 62 à deux bras 63, 64 est monté pivotant autour d'un axe 65 sur le corps 60 de la fiche.

L'extrémité libre de chaque bras 63, 64 comporte un crochet de verrouillage 66, 67.

Comme visible sur cette figure 3, le levier 62 peut être conformé avec une partie de préhension 68 qui permet de réaliser manuellement, de manière aisée, le pivotement du levier 62 autour de l'axe 65.

Les figures 4, 4A et 5 montrent plus en détail une embase 4 conforme à l'invention.

Les bords extérieurs 41 et la cavité 42 de chaque rebord 40 de l'embase comporte au moins une dépouille dans le cas d'une réalisation par moulage. La dépouille intérieure de la cavité 42 coopère avec l'extérieur du corps 60 de la fiche.

Chaque rebord 40 d'embase intègre de préférence à son extrémité libre une lèvre 43 faisant saillie de la face de connexion avec une fiche. La lèvre 43 permet de protéger mécaniquement, de l'environnement extérieur, un joint d'étanchéité 8 interposé entre embase 4 et fiche 6.

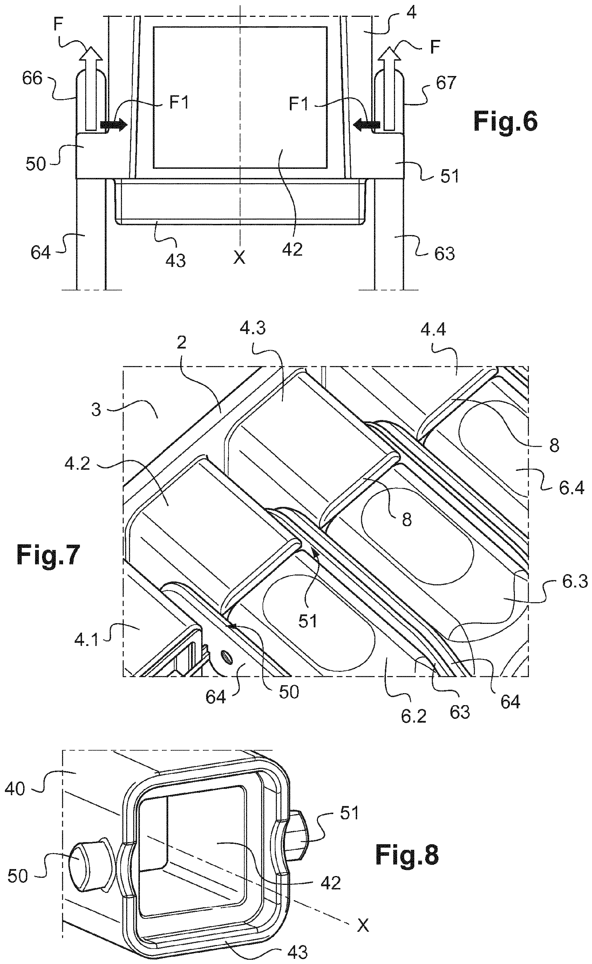

Comme illustré en figure 8, cette lèvre 43 peut être avantageusement un profilé continu tout autour de la cavité 42 d'embase. Ce profilé peut être facilement obtenu par moulage lors du moulage de l'ensemble 1 selon l'invention.

Chaque ergot de verrouillage 50, 51 peut avoir de manière avantageuse une forme extérieure tronconique, le sommet du cône étant vers la cavité 42 de l'embase qui le porte. Ainsi, comme illustré en figure 5, le demi-angle du tronc de cône a peut avoir une valeur de l'ordre de 4°.

On a illustré de manière schématique en figure 6, l'intérêt d'avoir des ergots de verrouillage 50, 51 sous la forme de tronc de cône. Lorsqu'un levier de verrouillage 62 vient s'accrocher avec ses crochets 66, 67 autour des deux ergots 50, 51 d'une embase 4, ces derniers exercent une force de traction selon les flèches F.

Du fait des dépouilles des ergots 50, 51, il résulte de la force de traction, des composantes de force selon les flèches F1. Ces composantes de force F1 dirigées l'une vers l'autre ont tendance à rapprocher mutuellement les branches 63, 64 du levier 62 et donc à augmenter la force de verrouillage de la fiche 6 sur son embase à laquelle elle est connectée.

La figure 7 montre clairement que les lèvres 43 des rebords 40 d'embase tendent à bien protéger mécaniquement et/ou à la lumière d'un environnement extérieur les joints d'étanchéité 8. Ainsi, ceux-ci sont moins exposés directement à la lumière UV et aux intempéries.

Sur la figure 7, on distingue également clairement la configuration lorsque chaque fiche 6.2, 6.3, 6.4 est connectée à une des embases 4.1, 4.2, 4.3 et verrouillée à cette dernière au moyen du levier de verrouillage 6 dans la position d'accrochage des crochets 66, 67 sur les ergots de verrouillage 50, 51.

Deux bras 63, 64 adjacents de deux leviers adjacents 6 sont en appui plan l'un contre l'autre. Cela est particulièrement avantageux, car outre l'aspect très compact de l'implantation des fiches, cela permet d'augmenter la résistance mécanique des connecteurs. En effet, en cas d'effort de traction latéral appliqué à un câble 7 relié à une fiche 6, celle-ci vient en appui contre la fiche adjacente, qui apporte donc un contre-effort à l'effort latéral.

La figure 8 montre une variante avantageuse de la lèvre 43 qui est un profilé continu tout autour de la cavité 42 d'embase 4.

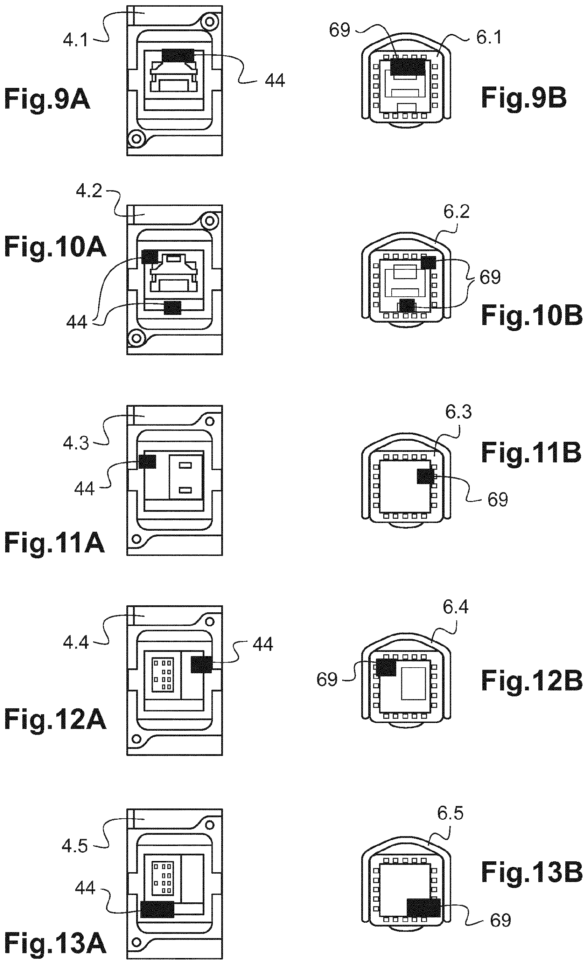

On a représenté aux figures 9A et 9B à 13A à 13B différentes versions de fiches destinées à être connectées chacune à leur embase correspondante.

Comme montré schématiquement sur ces figures au moyen de rectangles noirs, chaque fiche 6.1 à 6.5 peut intégrer sur sa face de connexion, un ou plusieurs reliefs ou en creux 69 qui présentent des dimensions et sont agencés de manière unique de telle sorte qu'il(s) ne peuvent s'emboiter qu'avec un ou les reliefs 44 de formes et dimensions complémentaires sur l'embase 4.1 à 4.5 correspondantes.

Ainsi, respectivement :
- la fiche 6.1 intégrant un transceiver 10 de type SFP ne peut être connectée uniquement qu'à l'embase 4.1 correspondante,
- la fiche 6.2 intégrant un embout de connecteur mâle de type RJ45 ne peut être connectée uniquement qu'à l'embase 4.2 correspondante,
- la fiche 6.3 intégrant des contacts pour signaux de puissance ne peut être connectée uniquement qu'à l'embase 4.3 correspondante,
- la fiche 6.4 intégrant des contacts pour signaux de données ne peut être connectée uniquement qu'à l'embase 4.4 correspondante,
- la fiche 6.5 intégrant des contacts pour signaux audio et/ou vidéo ne peut être connectée uniquement qu'à l'embase 4.4 correspondante,

Autrement dit, même si dans certaines configurations, les interfaces de signal d'une fiche d'un type peuvent toujours entrer en contact avec une embase d'un autre type pour laquelle la fiche n'est pas destinée, il est impossible pour un utilisateur d'introduire la fiche d'un type dans l'embase de cet autre type ou d'introduire la fiche de la version correcte à l'envers.

Ainsi, grâce au codage physique réalisé par reliefs ou creux complémentaires 44, 68, les erreurs de connexion par l'utilisateur sont évitées ainsi que tout endommagement des interfaces de signal qui sont sensibles aux chocs, car fragiles comme des contacts très fins ou des faces optiques.

La pluralité des fiches et des embases de l'ensemble selon l'invention peuvent être configurées pour fonctionner à des températures comprise entre -40°C et +125°C.

En termes d'étanchéité, les fiches et/ou les embases peuvent satisfaire la norme IP65, IP 67, IP68 ou UL50E.

L'opération de verrouillage/déverrouillage, ainsi que l'opération de connexion/déconnexion de chacune des fiches 6 à son embase correspondante décrite ci-dessus peut être particulièrement simple.

L'ensemble 1 selon l'invention qui vient d'être décrit permet d'établir un grand nombre de connexions sur une surface de panneau réduite, avec notamment un pas d'écartement entre embases adjacentes 4 de l'ordre de 26mm, ce qui permet ainsi d'obtenir une densité élevée de connexions sur un équipement électronique.

D'autres variantes et avantages de l'invention peuvent être réalisés sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

## Revendications

1. Système de connexion comprenant :
- une pluralité de fiches (6) de connexion sur chacune desquelles est monté un levier de verrouillage (62) à deux bras (63, 64) supportant chacun un crochet de verrouillage (66, 67) d'un système de verrouillage (5),
- un ensemble comprenant :
• un panneau (2) de boitier d'équipement électronique, destiné à loger une carte de circuit électronique (3), le panneau comprenant une pluralité d'ouvertures;
• une pluralité d'embases (4, 4.1, 4.2, 4.3, 4.4, 4.5,...) adjacentes,
le système de connexion étant **caractérisé par le fait que** la pluralité d'embases comporte chacune une partie tubulaire creuse (40) formant un rebord faisant saillie par rapport au panneau du côté de l'équipement opposé à celui duquel la carte de circuit électronique est agencée, chaque rebord (40) portant deux ergots de verrouillage (50, 51) du système de verrouillage (5) d'une fiche (6, 6.1, 6.2, 6.3, 6.4, 6.5,...) à une des embases dans leur configuration de connexion mutuelle, les cavités (42) des parties tubulaires des embases définissant les ouvertures du panneau;
et
**caractérisé par le fait que** la pluralité d'embases est monobloc avec le panneau de l'équipement et **par le fait que** les embases (4) de l'ensemble et les fiches (6) sont configurées de telle sorte que lorsque chaque fiche (6) est connectée à une des embases et verrouillée à cette dernière au moyen du levier de verrouillage dans la position d'accrochage des crochets sur les ergots de verrouillage, deux bras (63, 64) adjacents de fiches adjacentes (6.1, 6.2 ; 6.2, 6.3, 6.3, 6.4 ; 6.4, 6.5) sont en appui-plan, linéaire ou ponctuel l'un contre l'autre.

2. Système de connexion selon la revendication 1, **caractérisé par le fait qu'**au moins une des fiches (6), destinée à être montée sur au moins un câble (7) comportant au moins un conducteur optique, comporte un corps (60) et au moins un convertisseur optoélectronique (61) fixé dans le corps (5) de façon amovible.

3. Système de connexion selon la revendication 1 ou 2, **caractérisé par le fait que** chaque embase (4.1 à 4.5) comprend un ou plusieurs formes (44) en relief ou en creux dans sa cavité adaptée pour s'emboîter avec une ou plusieurs formes (69) respectivement en creux ou en relief sur l'extrémité libre d'une fiche donnée (6.1 à 6.5), destinée à être connectée avec ladite embase, ou vice-et-versa.

4. Système de connexion selon la revendication 3, **caractérisé par le fait qu'**au moins une embase parmi la pluralité des embases comprend un ou des reliefs ou creux de dimensions différentes et/ou agencés différemment par rapport à celui ou ceux d'une autre embase parmi la pluralité des embases.

5. Système de connexion selon l'une des revendications précédentes, **caractérisé par le fait que** chaque embase comprend une ou plusieurs inscriptions en relief ou en creux et/ou une ou plusieurs zones de couleur, à l'extérieur de sa cavité, la(les) inscription(s) et/ou zone(s) de couleur correspondant à celle(s) d'une fiche donnée, destinée à être connectée avec ladite embase.

6. Ensemble monobloc (1), destiné à un système de connexion selon l'une des revendications précédentes, ensemble comprenant :
• un panneau (2) de boitier d'équipement électronique, destiné à loger une carte de circuit électronique (3), le panneau comprenant une pluralité d'ouvertures;
• une pluralité d'embases (4, 4.1, 4.2, 4.3, 4.4, 4.5,...) adjacentes, comportant chacune une partie tubulaire creuse (40) formant un rebord faisant saillie par rapport au panneau du côté de l'équipement opposé à celui duquel la carte de circuit électronique est agencée, chaque rebord (40) portant deux ergots de verrouillage (50, 51) du système de verrouillage (5) d'une fiche (6, 6.1, 6.2, 6.3, 6.4, 6.5,...) à une des embases dans leur configuration de connexion mutuelle, les cavités (42) des parties tubulaires des embases définissant les ouvertures du panneau; **caractérisé par le fait que** la pluralité d'embases est moulée intégralement avec le panneau.

7. Ensemble monobloc (1) selon l'une des revendications précédentes, **caractérisé par le fait que** les ergots de verrouillage sont continus entre les embases adjacentes.

8. Ensemble monobloc (1) selon la revendication 6 ou 7, **caractérisé par le fait que** les bords extérieurs (41) et la cavité (42) de chaque rebord (40) comportent au moins une dépouille.

9. Ensemble monobloc (1) selon la revendication 8, **caractérisé par le fait que** la dépouille intérieure de la cavité (42) est adaptée pour coopérer avec l'extérieur du corps (60) d'une fiche.

10. Ensemble monobloc (1) selon l'une des revendications précédentes, **caractérisé par le fait que** chaque ergot de verrouillage (50, 51) comprend une zone de contact avec un crochet de verrouillage (66, 67) d'un levier de verrouillage (62) d'une fiche en position de verrouillage, la zone de contact comportant au moins une dépouille, ou une pente droite inclinée, ou une pente incurvée adaptée pour générer, lors de l'accrochage des crochets sur lesdits ergots, des composantes de force dirigées l'une vers l'autre de sorte à rapprocher mutuellement deux bras (63, 64) du levier d'une fiche.

11. Ensemble monobloc (1) selon la revendication 10, **caractérisé par le fait que** la dépouille de la zone de contact de l'ergot a une forme extérieure tronconique, le sommet du cône étant vers la cavité (42) de l'embase qui le porte.

12. Ensemble monobloc (1) selon l'une des revendications précédentes, **caractérisé par le fait que** chaque rebord (40) d'embase intègre à son extrémité libre une lèvre (43) faisant saillie de la face de connexion avec une fiche, la lèvre étant adaptée pour protéger mécaniquement et/ou de la lumière, de l'environnement extérieur, un joint d'étanchéité (8) interposé entre embase et fiche.

13. Ensemble monobloc (1) selon la revendication 12, **caractérisé par le fait que** la lèvre (43) est un profilé continu tout autour de la cavité d'embase.

## Patentansprüche

1. Verbindungssystem, umfassend:
- eine Mehrzahl von Verbindungssteckern (6), an denen jeweils ein Verriegelungshebel (62) mit zwei Armen (63, 64) montiert ist, die jeweils einen Verriegelungshaken (66, 67) eines Verriegelungssystems (5) tragen,
- eine Anordnung, umfassend:
• ein Panel (2) eines Gehäuses einer elektronischen Einrichtung, das dazu bestimmt ist, eine Leiterplatte (3) aufzunehmen, wobei das Panel eine Mehrzahl von Öffnungen umfasst;
• eine Mehrzahl von benachbarten Sockeln (4, 4.1, 4.2, 4.3, 4.4, 4.5 ...),
wobei das Verbindungssystem **dadurch gekennzeichnet ist, dass** die Mehrzahl von Sockeln jeweils einen hohlen rohrförmigen Teil (40) aufweist, der einen Kragen bildet, der in Bezug auf das Panel von der Seite der Einrichtung absteht, die zu der, auf der die Leiterplatte angeordnet ist, entgegengesetzt ist, wobei jeder Kragen (40) zwei Verriegelungsnasen (50, 51) des Verriegelungssystems (5) zur Verriegelung eines Steckers (6, 6.1, 6.2, 6.3, 6.4, 6.5 ...) an einem der Sockel in ihrer wechselseitigen Verbindungskonfiguration trägt, wobei die Hohlräume (42) der rohrförmigen Teile der Sockel die Öffnungen des Panels definieren;
und
**dadurch gekennzeichnet ist, dass** die Mehrzahl von Sockeln einteilig mit dem Panel der Einrichtung ist, und dadurch, dass die Sockel (4) der Anordnung und die Stecker (6) derart ausgestaltet sind, dass, wenn jeder Stecker (6) mit einem der Sockel verbunden ist und an diesem mittels des Verriegelungshebels in der Einhakposition der Haken an den Verriegelungsnasen verriegelt ist, zwei benachbarte Arme (63, 64) von benachbarten Steckern (6.1, 6.2; 6.2, 6.3; 6.3, 6.4; 6.4, 6.5) flächig, linear oder punktuell aneinander liegen.

2. Verbindungssystem nach Anspruch 1, **dadurch gekennzeichnet, dass** mindestens einer der Stecker (6), der dazu bestimmt ist, an mindestens einem Kabel (7) montiert zu werden, das mindestens einen Lichtleiter umfasst, einen Körper (60) aufweist und mindestens einen optoelektronischen Wandler (61), der lösbar in dem Körper (5) befestigt ist.

3. Verbindungssystem nach Anspruch 1 oder 2, **dadurch gekennzeichnet, dass** jeder Sockel (4.1 bis 4.5) eine oder mehrere erhabene oder vertiefte Formen (44) in seinem Hohlraum umfasst, der geeignet ist, mit einer oder mehreren vertieften beziehungsweise erhabenen Formen (69) an dem freien Ende eines gegebenen Steckers (6.1 bis 6.5) zusammengesteckt zu werden, der dazu bestimmt ist, mit dem Sockel verbunden zu werden, oder umgekehrt.

4. Verbindungssystem nach Anspruch 3, **dadurch gekennzeichnet, dass** mindestens ein Sockel unter der Mehrzahl der Sockel eine oder mehrere Erhebungen oder Vertiefungen umfasst, die andere Abmessungen haben und/oder anders angeordnet sind als die eines anderen Sockels unter der Mehrzahl der Sockel.

5. Verbindungssystem nach einem der vorhergehenden Ansprüche, **dadurch gekennzeichnet, dass** jeder Sockel eine oder mehrere erhabene oder vertiefte Beschriftungen und/oder einen oder mehrere Farbbereiche außerhalb seines Hohlraums umfasst, wobei die Beschriftung(en) und/oder der(die) Farbbereich(e) mit der(dem) oder denen eines gegebenen Steckers übereinstimmen, der dazu bestimmt ist, mit dem Sockel verbunden zu werden.

6. Einteilige Anordnung (1), die für ein Verbindungssystem nach einem der vorhergehenden Ansprüche bestimmt ist, wobei die Anordnung umfasst:
• ein Panel (2) eines Gehäuses einer elektronischen Einrichtung, das dazu bestimmt ist, eine Leiterplatte (3) aufzunehmen, wobei das Panel eine Mehrzahl von Öffnungen umfasst;
• eine Mehrzahl von benachbarten Sockeln (4, 4.1, 4.2, 4.3, 4.4, 4.5 ...), die jeweils einen hohlen rohrförmigen Teil (40) aufweisen, der einen Kragen bildet, der in Bezug auf das Panel von der Seite der Einrichtung absteht, die zu der, auf der die Leiterplatte angeordnet ist, entgegengesetzt ist, wobei jeder Kragen (40) zwei Verriegelungsnasen (50, 51) des Verriegelungssystems (5) eines Steckers (6, 6.1, 6.2, 6.3, 6.4, 6.5 ...) zur Verriegelung an einem der Sockel in ihrer wechselseitigen Verbindungskonfiguration trägt, wobei die Hohlräume (42) der rohrförmigen Teile der Sockel die Öffnungen des Panels definieren, **dadurch gekennzeichnet, dass** die Mehrzahl von Sockeln einstückig mit dem Panel geformt ist.

7. Einteilige Anordnung (1) nach einem der vorhergehenden Ansprüche, **dadurch gekennzeichnet, dass** die Verriegelungsnasen zwischen benachbarten Sockeln durchgehend sind.

8. Einteilige Anordnung (1) nach Anspruch 6 oder 7, **dadurch gekennzeichnet, dass** die äußeren Ränder (41) und der Hohlraum (42) jedes Kragens (40) mindestens eine Verjüngung aufweisen.

9. Einteilige Anordnung (1) nach Anspruch 8, **dadurch gekennzeichnet, dass** die innere Verjüngung des Hohlraums (42) geeignet ist, mit der Außenseite des Körpers (60) eines Steckers zusammenzuwirken.

10. Einteilige Anordnung (1) nach einem der vorhergehenden Ansprüche, **dadurch gekennzeichnet, dass** jede Verriegelungsnase (50, 51) einen Kontaktbereich mit einem Verriegelungshaken (66, 67) eines Verriegelungshebels (62) eines Steckers in Verriegelungsposition umfasst, wobei der Kontaktbereich mindestens eine Verjüngung oder eine geneigte gerade Schräge oder eine gewölbte Schräge aufweist, die geeignet ist, beim Einhaken der Haken an die Nasen zueinander gerichtete Kraftkomponenten zu erzeugen, so dass die beiden Arme (63, 64) des Hebels eines Steckers wechselseitig angenähert werden.

11. Einteilige Anordnung (1) nach Anspruch 10, **dadurch gekennzeichnet, dass** die Verjüngung des Kontaktbereichs der Nase außen kegelstumpfförmig ist, wobei die Spitze des Kegels zu dem Hohlraum (42) des Sockels weist, der sie trägt.

12. Einteilige Anordnung (1) nach einem der vorhergehenden Ansprüche, **dadurch gekennzeichnet, dass** jeder Kragen (40) eines Sockels an seinem freien Ende eine Lippe (43) beinhaltet, die von der Verbindungsseite mit einem Stecker absteht, wobei die Lippe geeignet ist, eine zwischen Sockel und Stecker gesetzte Dichtung (8) mechanisch und/oder vor Licht, vor der Außenumgebung zu schützen.

13. Einteilige Anordnung (1) nach Anspruch 12, **dadurch gekennzeichnet, dass** die Lippe (43) ein durchgehendes Profil rund um den Hohlraum eines Sockels ist.

## Claims

1. A connection system comprising:
- a plurality of connection plugs (6) on each of which is mounted a locking lever (62) with two arms (63, 64) each one supporting a locking hook (66, 67) of a locking system (5),
- an assembly comprising:
• an electrical equipment box panel (2), designed to lodge an electronic circuit card (3), the panel comprising a plurality of openings;
• a plurality of adjacent sockets (4.1, 4.2, 4.3, 4.4., 4.5, ...),
the connection system being **characterized by** the fact that the plurality of sockets each comprises a hollow tubular portion (40) forming a rim projecting relative to the panel on the equipment side opposite the side where the electronic circuit card is arranged, each rim (40) bearing two locking lugs (50, 51) of the locking system (5) of a plug (6.1, 6.2, 6.3, 6.4, 6.5, ...) for locking to one of the sockets in their mutual connection configuration, the cavities (42) of the tubular portions of the sockets defining the openings of the panel;
and
**characterized by** the fact that the plurality of sockets is monobloc with the equipment panel and in that the sockets (4) of the assembly and the plugs (6) are configured such that when each plug (6) is connected to one of the sockets and locked to the latter by means of the locking lever in the position of attachment of the hooks to the locking lugs, two adjacent arms (63, 64) of adjacent plugs (6.1, 6.2, 6.3, 6.4, 6.5) are in planar, point like or linear bearing against each other.

2. The connection system according to Claim 1, **characterized in that** at least one of the plugs (6) designed to be mounted on at least one cable (7) comprising at least one optical conductor has a body (60) and at least one optoelectronic converter (61) secured in the body (5) in a removable manner.

3. The connection system according to Claim 1 or 2, **characterized in that** each socket (4.1 to 4.5) comprises one or more relief or hollow shapes (44) in its cavity, adapted to fit together with one or more respective hollow or relief shapes (69) at the free end of a given plug (6.1 to 6.5), designed to be connected to said socket, or vice versa.

4. The connection system according to Claim 3, **characterized in that** at least one socket of the plurality of sockets comprises one or more reliefs or cavities of different dimensions and/or different arrangement as compared to that or those of another socket of the plurality of sockets.

5. The connection system according to one of the preceding claims, **characterized in that** each socket comprises one or more inscriptions in relief or recessed and/or one or more colour zones, on the outside of its cavity, the inscription(s) and/or colour zone(s) corresponding to those of a given plug which is designed to be connected to said socket.

6. A monobloc assembly (1), intended for a connection system according to one of the preceding claims, the assembly comprising:
• an electrical equipment box panel (2), designed to lodge an electronic circuit card (3), the panel comprising a plurality of openings;
• a plurality of adjacent sockets (4.1, 4.2, 4.3, 4.4., 4.5, ...), each comprising a hollow tubular portion (40) forming a rim projecting relative to the panel on the equipment side opposite the side where the electronic circuit card is arranged, each rim (40) bearing two locking lugs (50, 51) of the locking system (5) of a plug (6.1, 6.2, 6.3, 6.4, 6.5, ...) for locking to one of the sockets in their mutual connection configuration, the cavities (42) of the tubular portions of the sockets defining the openings of the panel; **characterized by** the fact that the plurality of sockets is moulded integrally with the panel.

7. The monobloc assembly (1) according to one of the preceding claims, **characterized in that** the locking lugs are continuous between adjacent sockets.

8. The monobloc assembly (1) according to Claim 6 or 7, **characterized in that** the outer edges (41) and the cavity (42) of each rim (40) comprise at least one clearance.

9. The monobloc assembly (1) according to Claim 8, **characterized in that** the interior clearance of the cavity (42) is adapted to cooperate with the exterior of the body (60) of a plug.

10. The monobloc assembly (1) according to one of the preceding claims, **characterized in that** each locking lug (50, 51) comprises a zone of contact with a locking hook (66, 67) of a locking lever (62) one of the plugs in the locking position, the zone of contact having at least one clearance, or a straight inclined slope, or a curved slope adapted to generate, when attaching the hooks to said lugs, force components directed toward each other so as to mutually bring together the lever arms (63, 64) of the plug.

11. The monobloc assembly (1) according to Claim 10, **characterized in that** the clearance of the contact zone of the lug has an exterior shape of a truncated cone, the vertex of the cone pointing toward the cavity (42) of the socket which carries it.

12. The monobloc assembly (1) according to one of the preceding claims, **characterized in that** each rim (40) of a socket integrates at its free end a lip (43) projecting from the connection face with a plug, the lip being adapted to protect mechanically and/or against light from the outside environment a seal (8) inserted between socket and plug.

13. The monobloc assembly (1) according to Claim 12, **characterized in that** the lip (43) is a continuous profile all around the cavity of the socket.
